(19) Europäisches Patentamt

European Patent Office

Office européen des brevets

(11) **EP 1 370 343 B1**

(12) **EUROPEAN PATENT SPECIFICATION**

(45) Date of publication and mention
of the grant of the patent:
**14.09.2005  Bulletin 2005/37**

(21) Application number: **02702480.1**

(22) Date of filing: **26.02.2002**

(51) Int Cl.$^7$: **B01D 53/94**, F01N 3/08

(86) International application number:
**PCT/GB2002/000784**

(87) International publication number:
**WO 2002/068099 (06.09.2002 Gazette 2002/36)**

(54) **GAS TREATMENT USING NOx-SPECIFIC REACTANT**

GASBEHANDLUNG MIT NOX-SPEZIFISCHEM REAKTANT

TRAITEMENT DE GAZ METTANT EN OEUVRE UN REACTIF SPECIFIQUE AUX NOX

(84) Designated Contracting States:
**AT BE CH CY DE DK ES FI FR GB GR IE IT LI LU MC NL PT SE TR**

(30) Priority: **26.02.2001  GB 0104682**

(43) Date of publication of application:
**17.12.2003  Bulletin 2003/51**

(73) Proprietor: **JOHNSON MATTHEY PUBLIC LIMITED COMPANY**
**London SW1Y 5BQ (GB)**

(72) Inventor: **TWIGG, Martyn Vincent**
**Caxton, Cambridge CB3 8PQ (GB)**

(74) Representative: **Nunn, Andrew Dominic**
**Johnson Matthey Technology Centre,**
**Blount's Court,**
**Sonning Common**
**Reading,**
**Berkshire RG4 9NH (GB)**

(56) References cited:
**WO-A-00/21647          US-A- 6 092 367**
**US-A- 6 125 629**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to gas treatment, and more particularly to treatment of a gas stream containing a NOx-specific reactant or one or more nitrogen oxides (NOx), especially in an exhaust gas stream of an internal combustion engine.

By "NOx specific reactant" herein, we mean a reducing agent that, in most conditions, preferentially reduces NOx over other components of a gaseous mixture. Examples of NOx-specific reactants include nitrogenous compounds such as nitrogen hydrides, e.g. ammonia ($NH_3$) or hydrazine, or an $NH_3$ precursor.

By "$NH_3$ precursor" we mean one or more compounds from which $NH_3$ can be derived, e.g. by hydrolysis. These include urea ($CO(NH_2)_2$) as an aqueous solution or as a solid or ammonium carbamate ($NH_2COONH_4$). If the urea is used as an aqueous solution, a eutectic mixture, e.g. a 32.5% $NH_3$ (aq), is preferred. Additives can be included in the aqueous solutions to reduce the crystallisation temperature.

Urea hydrolyses at temperatures above 160°C according to equation (1) to liberate $NH_3$ itself. It also thermally decomposes at this temperature and above according to equations (2) and (3) resulting in reduction of NOx.

$$CO(NH_2)_2 + H_2O \rightarrow 2NH_3 + CO_2 \qquad (1)$$

$$CO(NH_2)_2 \rightarrow NH_2 + CO \qquad (2)$$

$$NH_2 + NO \rightarrow N_2 + H_2O \qquad (3)$$

The $NH_3$ can be in anhydrous form or as an aqueous solution, for example. Injectors for such reactants or compounds, possibly using carrier gas such as air, have been published. There may be a distinct step of catalytically reacting the precursor to $NH_3$.

In order to meet existing and future emission legislation, generally a vehicular exhaust system includes one or more components, such as catalysts. One of the legislated exhaust gas components is NOx. During normal operation, the exhaust gas produced by a lean-burn internal combustion engine, for example, includes an excess of oxygen and oxidising species. It is very difficult to reduce NOx to $N_2$ in an oxidising or lean atmosphere. In order to treat NOx in lean exhaust gases, a component has been developed that absorbs NOx during normal lean-burn operation of the engine. This component is commonly called a NOx-trap and generally it includes: (i) an oxidation catalyst (e.g. platinum) to oxidise NO in the exhaust gas to $NO_2$ in the oxidising atmosphere; (ii) a NOx storage component to store the $NO_2$ e.g. as the nitrate. The NOx storage component is generally a basic compound of an alkali metal or an alkaline-earth, such as barium oxide; and (iii) a reduction catalyst, such as rhodium. It is possible, however, to use a NOx trap formulation in certain circumstances which comprises only the NOx storage component, or the NOx storage component and one or other of the oxidation and reduction catalyst.

Intermittently, the engine is run rich e.g. by adjusting the moment of fuel injection into one or more cylinders, or a reducing agent is injected into the exhaust gas in order to remove the stored NOx and reduce it to $N_2$. This also regenerates the absorber for another store-regenerate cycle.

One approach for removing NOx from a gas stream is by selective catalytic reduction (SCR), which comprises adding e.g. $NH_3$ to the gas and passing the mixture over a catalyst effective to react the NOx and $NH_3$ to nitrogen. Another approach is described in our WO 00/21647 wherein NOx from a diesel engine exhaust gas is removed by absorbing it in a solid absorbent. The absorbent is regenerated by the action of a NOx-specific reactant. Either such process requires careful control to avoid over- or under- supply of e.g. $NH_3$, leading respectively to emission of $NH_3$ or NOx. $NH_3$ is an irritant and has an unpleasant odour and, accordingly, it is undesirable to slip $NH_3$ to atmosphere. In practice this would mean positioning an oxidation "clean-up" catalyst downstream of the SCR catalyst or NOx-trap to oxidise slipped $NH_3$ to NOx. Therefore, slipping NOx *per se,* by providing inadequate levels of $NH_3$, or $NH_3$ would have the effect of reducing the overall effectiveness of the exhaust system to limit NOx emissions.

We have now discovered that it is possible to regenerate a NOx-trap formulation using a NOx-specific reactant, such as $NH_3$, whilst substantially preventing slip of NOx-specific reactant. In particular, we have found that it is possible to "titrate" the NOx-specific reactant against the absorbed NOx, whereby addition of NOx-specific reactant is stopped before the stored NOx is depleted. Thus, stored NOx is present to react with the NOx-specific reactant thereby to prevent or substantially reduce the likelihood of NOx-specific reactant slip. By combining a NOx storage component and a catalyst for the reduction of NOx using a NOx-specific reactant, NOx slip can also be reduced or avoided.

This discovery runs counter to the current application of the NOx-trap in practice, in that, in our invention, we intentionally avoid substantially regenerating the NOx-trap to completeness in order to retain sufficient stored NOx to react with NOx-specific reactant thereby to prevent slip of the NOx-specific reactant. Whilst this observation is of use in vehicle engine exhaust treatment, it also has use in stationary power and chemical plant applications.

Prior documents referred to herein are incorporated by reference.

According to one aspect, the invention provides a process for treating gas containing $NO_x$, which process comprising: removing $NO_x$ from the gas using a solid absorbent comprising a basic material wherein the solid absorbent is disposed on at least two substrates in series, intermittently regenerating the absorbent by the action of a $NO_x$-specific reactant and stopping the action of the $NO_x$-specific reactant when $NO_x$-specific reactant is detected at a point between the at least two substrates thereby substantially preventing slip of $NO_x$-specific reactant.

In a preferred embodiment the intermittent regeneration embodiment of the present invention is carried out in an exhaust system of a vehicle including an internal combustion engine, preferably a lean-burn internal combustion engine.

According to a further aspect, the invention provides an exhaust system for an internal combustion engine, which system comprising a solid $NO_x$-absorbent disposed on at least two substrates in series, means for injecting a $NO_x$-specific reactant or a precursor of a $NO_x$-specific reactant upstream of the solid $NO_x$ absorbent, means for detecting $NO_x$-specific reactant between the at least two substrates and means for stopping $NO_x$-specific reactant injection when $NO_x$-specific reactant is detected at a point between the at least two substrates, whereby $NO_x$ stored on the solid $NO_x$ absorbent is reduced by the $NO_x$-specific reactant and the solid $NO_x$ absorbent is partially regenerated, thereby substantially preventing slip of $NO_x$-specific reactant.

In one embodiment according to this aspect, the exhaust system further comprises a catalyst for the reaction of NOx with NOx-specific reactant upstream and/or intimately associated with a NOx-absorbent material component of the NOx-trap, which catalyst is disposed downstream of the means for injecting the NOx-specific reactant.

The system can further include sensors for sensing the presence of e.g. $NH_3$ downstream of the NOx-trap and a control means, such as the computer of the engine management unit or a dedicated computer which control means is pre-programmed to control the introduction of $NH_3$ or precursor into the exhaust passage. For example, the control means can operate in response to the presence or absence of $NH_3$ (detected by the sensor) downstream of the NOx-trap in order to provide a "negative feed-back loop" arrangement, i.e. when $NH_3$ is sensed, the control means switches off the supply of $NH_3$ or its precursor and *vice versa*.

As defined herein a "solid absorbent", "absorbent" and "absorbent material", "storage component" are used interchangeably; "NOx absorber", "absorber" or "NOx trap" refers to a substrate comprising the solid absorbent, absorbent, absorbent material or storage component.

In the NOx-removal process at the end of regeneration the absorbent typically contains 5 to 50% of the content of such compounds present at the start of regeneration. To ensure a high level of NOx removal in the absorption phase, the absorbent is not highly loaded, for example suitably regeneration is started when the absorbent contains 5 to 50% of the NOx content at which NOx absorption ceases.

In addition to controlling supply of $NO_x$-specific reactant in the manner according to the invention, in embodiments the supply of $NO_x$-specific reactant can be stopped according to one or both of the following principles:

(a) when a level of NOx content prescribed by design data, for example on the basis of integration of gas-phase NOx flow over time, has been reached;
(b) when a level of NOx content established iteratively (or empirically) from an initial observation of NOx-specific reactant slip has been reached.

Usually the regeneration phase can be a small fraction, e.g. 0.1% to 5%, of engine running time, depending of course on operating conditions. The time frame of absorption and regeneration can be very short, even down to the so-called 'microscopic' scale e.g. of single engine cylinder strokes or firing order repeats. A suitable range is 1 second to 10 minutes. Accurate and timely supply of NOx-specific reactant may be effected by means of a high pressure system analogous to the common-rail system used for engine fuel injection.

The absorbent and any catalyst are suitably supported on a ceramic or metal honeycomb or foam substrate, the ceramic comprising one or more of alumina, silica, titania, cordierite, ceria, zirconia, silicon carbide or other, generally oxidic, material. The honeycomb or foam substrate preferably carries a washcoat and, in one or more layers thereon, the active absorptive sad/or catalytic material. The honeycomb has typically at least 50, for example 50-400, cells per square inch (cpsi) (7.8 - 62.0 cells $cm^{-2}$), possibly more, e.g. up to 800 cpsi (124 cells $cm^{-2}$), or up to 1200 cpsi (186 cells $cm^{-2}$) if composed structurally of metal. Generally the range 200 - 800 cpsi (31 - 124 cells $cm^{-2}$) is preferred for the substrate comprising nitroxy salt or absorbent and any catalyst.

The absorbent may be selected from compounds of alkali metals, alkaline earth metals, rare earth metals and transition metals, capable of forming nitroxy salt (nitrates and/or nitrites) of adequate stability in absorbing conditions and of reacting with NOx-specific reactant in regenerating conditions. The "conditions" can include temperature of the gas and its redox state as expressed for example by its lambda; and/or adsorptive materials such as zeolites, carbons and high-area oxides.

Absorbent compounds may be present (before NOx absorption) as composite oxides, e.g. of alkaline earth metal and copper such as Ba-Cu-O or $MnO_2$-$BaCuO_2$, possibly with added Ce oxide, or Y-Ba-Cu-O and Y-Sr-Co-O. (The oxides are referred to for simplicity, but in practice hydroxides, carbonates and carboxylates such as acetates are present, depending on the temperature and gas composition). Whichever compounds are used, there may be present also one or more catalytic agents, such as precious metals, effective to promote reactions of NOx-specific reactant with nitroxy salt. Such catalysts are also known as SCR catalysts and can include iron/zeolite or $V_2O_5$/$TiO_2$. Where the NOx absorbent and SCR catalyst are associated, in one embodiment they are segregated. By "segregated" we mean that they should, at least, be supported on separate supports and can therefore be disposed in separate layers above and/or below the other component or in the same layer. Alternatively, they can be coated on distinct areas of the same substrate "brick" or on separate substrates disposed within the same system.

Typical gas compositions to be treated by the process are:

(i) $NH_3$ removal: 1 to 10000 ppm v/v, such as in situations from sewage, toilet and farm effluent gases, to industrial emissions e.g. from a chemical plant conducting aromatics nitration, nitric acid production or cyclohexane oxidation;

(ii) NOx removal: 1 to 1000 ppm v/v, such as in internal combustion engine exhausts and industrial emissions;

(iii) Other, major, constituents of such gases include nitrogen, water vapour and carbon dioxide, which generally have little if any unwanted effects on the absorbing material. If strongly oxidising or reducing gases are present in substantial quantities, the absorbent material should be chosen appropriately; and

(iv) Minor constituents may include for example one or more of CO (up to 500ppm v/v), and hydrocarbon ('HC': up to 500 ppm v/v). The gas can include SOx.

If the gas contains SOx, which generally causes loss of activity of the NOx absorber, the process may include a SOx absorber upstream of the NOx absorber. Whereas the SOx absorber may be regenerable, e.g. by intermittently subjecting it to high temperature and reducing gas composition, more conveniently the starting gas is of low sulfur content, as from an engine burning fuel of less than 10ppm sulfur; then the SOx absorber can be disposable, and may have sufficient capacity for replacement at the service interval of a vehicle. Since a SOx absorber and a NOx absorber can use the same absorptive material, the replacement procedure can consist in inserting a fresh absorber downstream of the NOx absorber and using the erstwhile NOx absorber as SOx absorber.

According to an embodiment, the present invention provides an exhaust treatment reactor adapted to such replacement, for example including a module accommodating two absorbers and formed with twin flange means for reverse insertion of the module after replacement of the erstwhile upstream absorber.

If the NOx of the gas stream to be treated contains NO in excess over $NO_2$, the process preferably includes an upstream step of catalytically oxidising NO to $NO_2$ at least sufficiently to bring NO and $NO_2$ to molecular equivalence. There may be a step of injecting oxygen if it is not already present in sufficient quantity.

If the gas stream contains particulate matter (PM), there may be a step of collecting these by filtration and/or impingement, preferably upstream of the NOx absorber. In the particular case of combustion exhaust gases, especially from internal combustion engines of the lean-burn type such as diesel or GDI, the PM may comprise soot, and then the process includes an upstream step of collecting the soot on a surface (such as of a catalyst) or porous filter. To effect overall continuous removal of such collected soot, an upstream NO catalytic oxidation step should be used, effecting substantially complete conversion of NO to $NO_2$. If necessary, the content of NOx can be supplemented from an external source, as described for example in EP-A-0341832 or WO 00/74823. Other means of enhancing oxidation may include introducing ozone (WO 99/36162) or plasma (WO 00/21646).

In the oxidation catalyst the active material comprises generally a platinum group metal ("PGM"), especially platinum and/or palladium, optionally with other PGMs, e.g. rhodium, and other catalytic or promoting components. The exact compositions and structure of the oxidation catalyst are not critical to operation of the invention, and hence may be varied according to the requirements of the situation. A low temperature light-off formulation is generally preferred. Conventional manufacturing techniques may be used. The catalyst should of course be sized and composed to achieve the necessary conversions, and the design should minimise trapping of PM (if present) within its honeycomb substrate.

The PM collector/filter may be any capable of trapping the PM without causing excessive backpressure. In general, ceramic, sintered metal or woven or non-woven wire filters are usable, and wall-flow honeycomb structures may be particularly suitable. The structural material of the filter is preferably porous ceramic oxide, silicon carbide or sintered metal. A coating such as alumina, and also a catalyst such as one or more platinum group metals (PGM) (e.

g. Pt with MgO) or La/Cs/$V_2O_5$ may be present. The PM is generally soot, mainly carbon and/or heavy hydrocarbons, which are converted to carbon oxides and $H_2O$. Certain embodiments of this principle are in commercial use in Johnson Matthey's Continuously Regenerating Trap (CRT®) technology, and are described in EP-A-0341832 and US 4902487, the teaching of which are incorporated herein by reference.

Regeneration using a NOx-specific reactant may be used especially in gases containing oxygen, for example:

(a) exhaust gas as generated by a lean-burn engine or as issuing from a preceding step of treating such exhaust;
(b) such gas to which reactant short of equivalence has been or is being added, for example to provide for reaction increasing gas temperature;
(c) gas made leaner, for example when the reactant is injected with air; or
(d) rich or equivalent (lambda=1) gas.

The point of injection of the reactant may most simply be just upstream of the absorber; in this event the temperature is typically in the range 150-300°C. However, injection may be earlier; if upstream of a filter but downstream of an oxidation catalyst, the temperature is typically in the range 250-350°C at filter inlet, as required for soot combustion. Further, the reactant may be injected upstream of the oxidation catalyst. Since in such earlier injection the fed reactant is at a 'spike' concentration to react over the short period of regeneration of the absorber, it is in substantial excess over the NOx in the flowing exhaust gas and consequently need not suffer much loss by reaction with NOx. If in an extreme case it were to react with all the flowing NOx to give $N_2$ or $N_2O$, this would stop combustion of soot on the filter: however, owing to the shortness of the NOx-specific reactant injection spike, any accumulation of soot would be small and combustion would be resumed before blockage took place. The temperature should not be high enough to give substantial oxidation of e.g. $NH_3$ to NOx over the oxidation catalyst. To limit unwanted side-reactions of e.g. $NH_3$ it may be introduced as a precursor compound, thus delaying availability of $NH_3$. Such limitation may also be provided by suitable formulation of the oxidation catalyst and/or filter. In particular, the filter may be of the non-catalysed type, free of deliberately introduced catalytic material such as PGM. Any fortuitous catalytic activity of the filter, due for example to its structural material or accumulated deposits such as carbon, appears not to seriously promote such side-reactions. If desired, such injection of reactant upstream of an oxidation catalyst can be by way of a non-catalytic sub-region of the honeycomb support of such catalyst, as described in WO 01/96717.

The exhaust system according to the invention may include established expedients such as electric heating or EGR. Such an engine burns fuel preferably less than 50 ppm, especially under 10 ppm, sulfur. For such an engine the process has the substantial advantage over regeneration processes using hydrocarbon that regeneration can take place in lean gas. If the engine includes a high-pressure system such as common-rail for fuel injection, that system may also actuate $NH_3$ injection in NOx absorbent regeneration.

In order that the invention may be more fully understood, the following embodiment and Examples are provided by way of illustration only and with reference to the accompanying drawings, in which:

Figure 1 is a schematic sectional view of an exhaust treatment system for an internal combustion engine; and

Figure 2 is a graph showing the results of %NOx conversion over a NOx-trap against time (seconds) at four inlet exhaust gas temperatures.

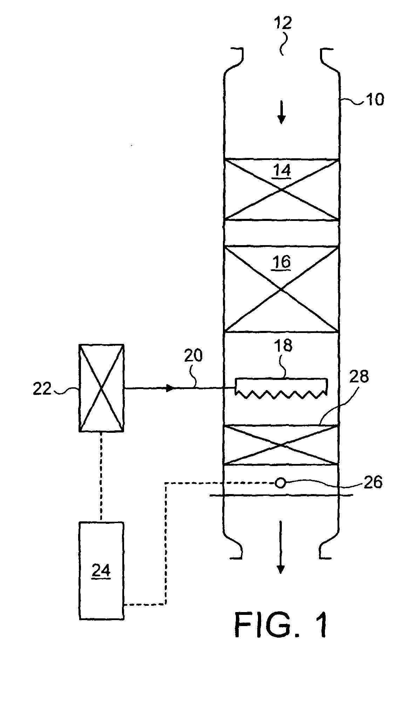

Referring to Figure 1, the system illustrated consists of single "can" 10, which is connected at 12 to the exhaust from a diesel engine (not shown) fuelled with diesel oil of under 10 ppm sulfur content. At the inlet end of can 10 is catalyst 14, which is a low temperature light-off oxidation catalyst supported on a 400 cells/in$^2$ (62 cells cm$^{-2}$) ceramic honeycomb monolith. Catalyst 14 is designed to be capable of meeting emission regulations in relation to CO and HC for the engine and vehicle and also converts at least 70% of the NO in the starting gas to $NO_2$.

The gas leaving catalyst 14 passes into soot filter 16, which is of the ceramic wall flow type and collects PM over 50nm. The $NO_2$ and surplus oxygen in the gas oxidise the soot at temperatures around 250°C as described in EP-A-341832. The gas leaving filter 16 is passed over sparging spray injector 18, from which it receives intermittent supplies of $NH_3$ or $NH_3$ precursor via line 20 from high-pressure pump 22 under the control of computer 24. Computer 24 receives data on engine running time and fuel used, on inlet gas temperature and composition and also, from sensor 26, on any slipped NOx or $NH_3$. It is programmed in particular to recalculate the $NH_3$ feed time to a shorter period if $NH_3$ is detected in gas leaving absorber 28.

To facilitate replacement of absorber 28, the can portion containing it may be linked to the main upper and lower portion of can 10 by flanges (not shown). If provision for SOx absorption is to be made, bed 28 may be in two parts, one upstream of the other, the upstream part being the SOx absorber. When the SOx-absorbing part is due for replacement, it can be replaced by a fresh SOx absorber and the can portion re-inserted with the unreplaced NOx absorber in the upstream position.

In the operation of the system two phases alternate. In the absorption phase the gas contains no $NH_3$ and the NOx content of the absorber slowly increases as the NOx reacts with the absorbent to give solid nitroxy salt. At the end of this phase the regeneration phase takes place, in which $NH_3$ is injected until part, suitably 50-90%, or possibly 5-50%, of the nitroxy salt has been reacted. During regeneration the system slips substantially no $NH_3$ downstream of absorber 28. Stopping injection ends the regeneration phase, so that the absorption phase re-starts with absorption of NOx re-starts from its end-level attained in the regeneration phase. If the regeneration phase were continued for longer, for example up to complete decomposition of the nitroxy salt, the $NH_3$ content of the gas leaving absorber 28 would rise to its level at the start of regeneration, thus emitting $NH_3$ to atmosphere unless a clean-up catalyst were provided as in conventional continuous SCR.

## EXAMPLE 1

A washcoat was prepared using a high shear mixer from 80 parts of gamma alumina (120 $m^2$ $g^{-1}$) and 20 parts zeolite with sufficient de-ionised water so the final slurry contained 45% solids. A ceramic cordierite monolith (5.66 inch (14.4 cm) diameter, 6 inch (15.2 cm) long) having 400 cells per square inch (62 cells $cm^{-2}$), was coated by pouring the slurry onto one face and down the channels of the ceramic monolith. Excess slurry was removed from the channels by blowing a jet of compressed air through them. The monolith was then dried in a hot air flow (150°C) for 30 minutes. The dried-coated monolith was then calcined at 500°C for an hour. The total dry washcoat loading on the coated monolith was 2.5 g $in^{-3}$ (0.15g $cm^{-3}$). The monolith was then impregnated with an aqueous solution of barium acetate by immersing it in the solution for five minutes, removed, and excess metal solution removed by suction. The monolith was then dried in flowing hot air (150°C) and then calcined at 500°C for an hour. The concentration of barium acetate solution was chosen such that the final barium loading on the monolith was 500 g $ft^3$ (17.6 $gl^{-1}$) achieved.

A core (one-inch (2.54 cm) diameter and three inches (7.62 cm) long) was carefully cut from the monolith using a diamond tipped tool. After wrapping with Fiberfrax™ paper (to prevent gas passing along the outside of the core) it was inserted into a stainless steel housing and placed in a computer controlled test flow reactor equipped with mass flow controllers and gas analysis capabilities before and after the test core. A synthetic gas mixture representative of the exhaust gas from a lean burn internal combustion engine (gas mixture 1 in Table 1) was passed through the monolith core at a steady pre-selected inlet temperature. The following gases were analysed using commercially available analysers: hydrocarbons (HC (Jum Engendering VE7)), carbon monoxide (CO (Unor 6N)), NOx (Ecophysics CLD 700 EL), and $NH_3$ was measured using a tuned infrared laser (Alt Optronic LDS 3000). After being on-line five minutes with gas mixture 1 at an inlet temperature of 150°C, the gas flow was changed to gas mixture 2 (Table 1), that contained $NH_3$ but no NOx. The inlet temperature was kept constant at 150°C, and after 5 minutes, the inlet gas was changed again to gas mixture 1 for a further 5 minutes, and the whole sequence was repeated several times.

Table 1.

| Inlet Gas Mixture Compositions | | |
|---|---|---|
| Gas Mixture | 1 | 2 |
| Space Velocity | 30,000 $h^{-1}$ | 30,000 $h^{-1}$ |
| CO | 200 ppm | 200 ppm |
| NOx | 200 ppm | 0 ppm |
| $NH_3$ | 0 ppm | 200 ppm |
| HC ($C_3$) | 100 ppm | 100 ppm |
| $O_2$ | 12 % | 12% |
| $H_2O$ | 4.5% | 4.5% |
| $CO_2$ | 4.5% | 4.5% |
| $N_2$ | balance | balance |

Typical analytical results obtained are summarised in Table 2 the form of NOx conversion at different times after the end of the $NH_3$ treatment phase. It is clear that $NH_3$ treatment of the saturated NOx absorber regenerated its NOx absorbing capability. During the initial part of the $NH_3$ treatment phase $NH_3$ was not detected in the exit gas.

Table 2.

| Conversion of NOx at different temperatures for the barium containing formulation (500 g ft$^{-3}$ (17.6 gl$^{-1}$)). | | |
|---|---|---|
| Temperature | Time after NH$_3$ treatment | NOx Conversion |
| 150°C | 5 s | 82% |
| | 30 s | 75% |
| | 120 s | 65% |
| | 300 s | 51% |
| 250°C | 5 s | 88% |
| | 30 s | 65% |
| | 60 s | 50% |
| | 300 s | 25% |

## EXAMPLE 2

A NOx absorber was made in the same way as described in Example 1, except the barium acetate was replaced by calcium nitrate in the impregnation stage. The concentration of the calcium nitrate solution was chosen to give a final product containing 500 g ft$^{-3}$ (17.6 gl$^{-1}$) calcium. Tests as in Example 1 were carried out with an inlet temperature of 165°C, and similar results to those with barium were obtained (Table 3), but at higher temperatures the NOx capacity was less than for the barium containing absorber. This may be due to a lower thermodynamic stability of the calcium NOx phase, or a lower rate of forming this phase with calcium containing absorber.

Table 3.

| NOx conversion results at different temperatures for calcium containing absorber formulation (500 g ft$^{-3}$ (17.6 gl$^{-1}$)). | | |
|---|---|---|
| Temperature | Time after NH3 treatment | NOx Conversion |
| 165°C | 5 s | 70% |
| | 30 s | 57% |
| | 120 s | 45% |
| | 300 s | 38% |

## EXAMPLE 3

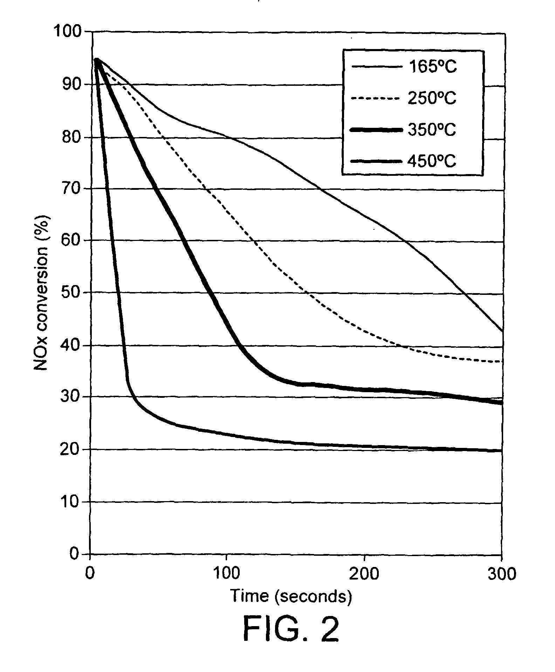

A NOx absorber was made in the same way as described in Example 1, except the barium acetate was replaced by cerium nitrate in the impregnation stage. The concentration of the cerium nitrate solution was chosen to give a final product containing 500 g ft$^{-3}$ (17.6 gl$^{-1}$) cerium. Tests as in Example 1 were carried out with an inlet temperature of 165°C, and similar results to those with barium were obtained. The results obtained at inlet temperatures of 165, 350, and 450°C are displayed graphically in Figure 2. Again it is clear that treatment of the saturated cerium containing NOx absorber with NH$_3$ restored its NOx storing capability. At the higher temperatures the NOx capacity is significantly less than at lower temperatures, probably because of the lower thermodynamic stability of the NOx derived cerium compound at the higher temperatures.

## EXAMPLE 4

A NOx absorber was made in the same way as described in Example 1, except the barium acetate was replaced by zirconyl nitrate in the impregnation stage. The concentration of the zirconyl nitrate solution was chosen to give a final product containing 500 g ft$^{-3}$ (17.6 gl$^{-1}$) zirconium. Tests as in Example 1 were carried out with an inlet temperature of 165°C, and similar results to those with barium at 150°C were obtained (Table 4). Other results were obtained at inlet temperatures of 250, 350, and 450°C are given in Table 4. Again it is clear that treatment of the saturated zirconium containing NOx absorber with NH$_3$ restored its NOx storing capability. At the higher temperatures the NOx capacity is significantly less than at lower temperatures, probably because of the lower thermodynamic stability of the NOx derived zirconium compound at the higher temperatures.

Table 4.

| NOx conversion results at different temperatures for zirconium containing absorber formulation (500 g ft$^{-3}$ (17.6 gl$^{-1}$)). | | |
|---|---|---|
| Temperature | Time after NH3 treatment | NOx Conversion |
| 165°C | 5 s | 93% |
| | 30 s | 86% |
| | 120 s | 81% |
| | 300 s | 63% |
| 250°C | 5 s | 71% |
| | 30 s | 69% |
| | 120 s | 60% |
| | 300 s | 23% |
| 350°C | 5 s | 81% |
| | 30 s | 73% |
| | 120 s | 33% |
| | 300 s | 29% |
| 450°C | 5 s | 48% |
| | 30 s | 42% |
| | 120 s | 39% |
| | 300 s | 38% |

## EXAMPLE 5

A cordierite monolith (5.66 inch (14.4cm) diameter, 6 inch (15.2cm) long, 400 cells per square inch (62 cells cm$^{-2}$) was coated with a washcoat consisting of gamma alumina (surface area 120 m$^2$ g$^{-1}$) in water made by slurrying sufficient solid in de-ionised water to give a solids content of 45%. The slurry was poured onto the face and down the channels of the ceramic monolith. Excess slurry was removed from the channels by compressed air. The water was then removed from the washcoat by drying in a hot air flow (150°C). The dry coated monolith was then calcined at 500°C for an hour. The total washcoat loading on the coated monolith was 2.5 g in$^{-3}$ (0.15g cm$^{-3}$). The coated monolith was then immersed in a platinum tetra-ammine solution for five minutes, removed, and excess solution removed by suction. The monolith was then dried in a hot air flow (150°C) and calcined at 500°C for an hour. The concentration of solution was chosen to give a platinum loading of 100 g ft$^{-3}$ (3.5 gl$^{-1}$) was achieved on the monolith. Next the monolith was impregnated with an aqueous barium acetate solution. The monolith was immersed in the solution for five minutes, removed, and excess solution removed by suction. The monolith was dried in a hot air flow (150°C) and calcined at 500°C for an hour. The concentration of solution was chosen such that a final barium loading of 800 g ft$^{-3}$ (28.0 gl$^{-1}$) was achieved on the monolith.

The final monolith was mounted in a stainless steel can using standard procedures, and fitted in the exhaust gas system of 1.9 litre, 4 cylinder turbo-charged diesel engine. The engine was coupled to a dynamometer in the conventional manner. The engine and dynamometer were computer controlled to allow a range of different engine operating conditions to be selected. Exhaust emissions of HC, CO, NO$_x$, O$_2$, and CO$_2$ pre- and post-catalyst were measured with commercial gas analysers in the conventional way. NH$_3$ was measured using a tuned infrared laser (Alt Optronic), and N$_2$O was measured with a Unor (Germany) instrument.

The engine was operated at 1200 rpm with a dynamometer load of 27 Nm, that resulted in a catalyst inlet exhaust gas temperature of 210°C. The catalyst inlet NOx concentration was 160 ppm, and the engine was run steadily at this condition. Every two minutes NH$_3$ gas was injected into the exhaust upstream of the catalyst in a short pulse. The NH$_3$ gas level during the injection period was 560 ppm. Initially during NH$_3$ injection N$_2$O was formed in amounts corresponding to that which were formed from the gas phase NOx being emitted from the engine, this decreased during the NH$_3$ reduction of stored NOx, presumably as it was absorbed and subsequently reduced to nitrogen. The NOx absorption/ NH$_3$ injection cycle was repeated several times with similar results each time. The NOx conversion achieved in a typical period after NH$_3$ injection is summarised in Table 5. It is clear from these results the NOx storing capability of the absorber in the exhaust gas of a Diesel engine is maintained by periodic treatment with NH$_3$. The overall NOx conversion could be enhanced by suitable optimisation of the system.

Table 5.

| Conversion of NOx in the exhaust gas of a Diesel engine at 210°C. | |
|---|---|
| Time after $NH_3$ treatment | NOx conversion |
| 5 s | 75% |
| 25 s | 63% |
| 50 s | 47% |
| 75 s | 41% |

**Claims**

1. A process for treating gas containing $NO_x$, which process comprising: removing $NO_x$ from the gas using a solid absorbent comprising a basic material wherein the solid absorbent is disposed on at least two substrates in series, intermittently regenerating the absorbent by the action of a $NO_x$-specific reactant and stopping the action of the $NO_x$-specific reactant when $NO_x$-specific reactant is detected at a point between the at least two substrates thereby substantially preventing slip of $NO_x$-specific reactant.

2. A process according to claim 1, wherein at the end of regeneration, the absorbent contains 5 to 50% of the content of nitroxy salt present at the start of regeneration.

3. A process according to claim 1 or 2, wherein regeneration is started when the absorbent contains 5 to 50% of the nitroxy salt content at which $NO_x$ slip takes place.

4. A process according to any preceding claim, wherein the time period of absorption and/or regeneration is in the range of from 1 second to 10 minutes.

5. A process according to any preceding claim, wherein the absorbent comprises a catalyst for the reaction of $NO_x$ with a $NO_x$-specific reactant.

6. A process according to claim 5, wherein the catalyst for the reaction of $NO_x$ with $NO_x$-specific reactant is disposed upstream of the absorbent, optionally on a separate support from the absorbent.

7. A process according to claim 5 or 6, wherein the catalyst for the reaction of $NO_x$ with a $NO_x$ specific reactant is a selective catalytic reduction (SCR) catalyst, such as iron/zeolite, $V_2O_5/TiO_2$ and/or precious metals.

8. A process according to any preceding claim including an upstream step of catalytically oxidising NO to $NO_2$.

9. A process according to any preceding claim, wherein the $NO_x$-specific reactant is produced *in situ* from a precursor thereof, optionally by catalytically reacting the precursor.

10. A process according to any preceding claim, wherein the starting gas is the exhaust of a lean-burn, especially diesel or gasoline direct injection, internal combustion engine.

11. A process according to any preceding claim, wherein the $NO_x$-specific reactant is ammonia and the precursor of the NOx specific reactant is urea.

12. A process according to any preceding claim, wherein absorption and regeneration are conducted under lean conditions.

13. An exhaust system for an internal combustion engine, which system comprising a solid $NO_x$-absorbent disposed on at least two substrates in series, means for injecting a $NO_x$-specific reactant or a precursor of a $NO_x$-specific reactant upstream of the solid $NO_x$ absorbent, means for detecting $NO_x$-specific reactant between the at least two substrates and means for stopping $NO_x$-specific reactant injection when $NO_x$-specific reactant is detected at a point between the at least two substrates, whereby $NO_x$ stored on the solid $NO_x$ absorbent is reduced by the $NO_x$-specific reactant and the solid $NO_x$ absorbent is partially regenerated, thereby substantially preventing slip of $NO_x$-

specific reactant.

**Patentansprüche**

1. Verfahren zur Behandlung von Gas, das $NO_x$ enthält, wobei das Verfahren umfasst: Ein Entfernen von $NO_x$ aus dem Gas unter Verwendung eines festen Absorptionsmittels, das ein Grundstoffmaterial umfasst, worin das feste Absorptionsmaterial in Reihe auf mindestens zwei Substraten angeordnet ist, ein intermittierendes Regenerieren des Absorptionsmittels durch die Wirkung eines $NO_x$-spezifischen Reaktanten und ein Stoppen der Wirkung des $NO_x$-spezifischen Reaktanten, wenn der $NO_x$-spezifische Reaktant detektiert wird an einem Punkt zwischen den mindestens zwei Substraten, wobei **dadurch** ein Entweichen des $NO_x$-spezifischen Reaktanten im Wesentlichen vermieden wird.

2. Verfahren nach Anspruch 1, worin am Ende einer Regeneration das Absorptionsmittel 5 bis 50 % des Gehalts an Nitroxysalz enthält, das am Beginn der Regeneration vorliegt.

3. Verfahren nach Anspruch 1 oder 2, worin eine Regeneration gestartet wird, wenn das Absorptionsmittel 5 bis 50 % des Nitroxysalzgehalts enthält, bei dem ein Entweichen von $NO_x$ stattfindet.

4. Verfahren nach einem vorstehenden Anspruch, wobei die Zeitdauer von Absorption und/oder Regeneration in dem Bereich von 1 Sekunde bis 10 Minuten liegt.

5. Verfahren nach einem vorstehenden Anspruch, wobei das Absorptionsmittel einen Katalysator für die Reaktion von $NO_x$ mit einem $NO_x$-spezifischen Reaktanten umfasst.

6. Verfahren nach Anspruch 5, wobei der Katalysator für die Reaktion von $NO_x$ mit dem $NO_x$-spezifischen Reaktanten stromaufwärts von dem Absorptionsmittel angeordnet ist, gegebenenfalls auf einem von dem Adsorptionsmittel getrennten Träger.

7. Verfahren nach Anspruch 5 oder 6, worin der Katalysator für die Reaktion von $NO_x$ mit einem $NO_x$-spezifischen Reaktanten ein Katalysator für eine selektive katalytische Reduktion (SCR) ist, wie Eisen/Zeolith, $V_2O_5/TiO_2$ und/ oder ein oder mehr Edelmetall(e).

8. Verfahren nach einem vorstehenden Anspruch, das stromaufwärts einen Schritt eines katalytischen Oxidierens von NO zu $NO_2$ einschließt.

9. Verfahren nach einem vorstehenden Anspruch, wobei der $NO_x$-spezifische Reaktant in situ aus einer Vorläuferverbindung davon hergestellt wird, gegebenenfalls durch katalytisches Umsetzen der Vorläuferverbindung.

10. Verfahren nach einem vorstehenden Anspruch, wobei das Ausgangsgas das Abgas eines Magerverbrennungsmotors, insbesondere eines Diesel- oder Benzindirekteinspritzverbrennungsmotors ist.

11. Verfahren nach einem vorstehenden Anspruch, worin der $NO_x$-spezifische Reaktant für Ammoniak steht, und die Vorläuferverbindung des $NO_x$-spezifischen Reaktanten für Hamstoff steht.

12. Verfahren nach einem vorstehenden Anspruch, worin Absorption und Regeneration unter mageren Bedingungen durchgeführt werden.

13. Abgassystem für einen Verbrennungsmotor, wobei das System umfasst ein festes $NO_x$-Absorptionsmittel, das auf mindestens zwei Substraten in Reihe angeordnet ist, Mittel zum Einspritzen eines $NO_x$-spezifischen Reaktanten oder eines Vorläufers eines $NO_x$-spezifischen Reaktanten stromaufwärts von dem festen $NO_x$-Absorptionsmittel, Mittel zur Detektion eines $NO_x$-spezifischern Reaktanten zwischen den mindestens zwei Substraten und Mittel zum Stoppen des Einspritzens eines $NO_x$-spezifischen Reaktanten, wenn ein $NO_x$-spezifischer Reaktant detektiert wird an einem Punkt zwischen den mindestens zwei Substraten, wobei $NO_x$, das auf dem festen $NO_x$ Absorptionsmittel gespeichert ist, durch den $NO_x$-spezifischen Reaktanten reduziert wird, und das feste $NO_x$-Absorptionsmittel teilweise regeneriert wird, um **dadurch** ein Entweichen des $NO_x$-spezifischen Reaktanten im Wesentlichen zu vermeiden.

**Revendications**

1. Processus de traitement de gaz contenant du $NO_x$, lequel processus comprenant : l'élimination du $NO_x$ du gaz en utilisant un absorbant solide comprenant un matériau de base dans lequel l'absorbant solide est disposé sur au moins deux substrats en série, en régénérant l'absorbant de manière intermittente par l'action d'un réactif spécifique du $NO_x$ et en stoppant l'action du réactif spécifique du $NO_x$ lorsque le réactif spécifique du $NO_x$ est détecté en un point situé au moins entre les deux substrats, évitant ainsi substantiellement le rejet du réactif spécifique du $NO_x$.

2. Processus selon la revendication 1, dans lequel à la fin de la régénération, l'absorbant contient de 5 à 50 % de la teneur en sel nitroxy présent au début de la régénération.

3. Processus selon la revendication 1 ou 2, dans lequel la régénération démarre lorsque l'absorbant contient de 5 à 50 % de la teneur en sel nitroxy à laquelle le rejet de $NO_x$ intervient.

4. Processus selon l'une quelconque des revendications précédentes, dans lequel le temps d'absorption et/ou de régénération se situe dans la plage de 1 seconde à 10 minutes.

5. Processus selon l'une quelconque des revendications précédentes, dans lequel l'absorbant comprend un catalyseur pour la réaction de $NO_x$ avec un réactif spécifique du $NO_x$.

6. Processus selon la revendication 5, dans lequel le catalyseur pour la réaction du $NO_x$ avec le réactif spécifique du $NO_x$ est disposé en amont de l'absorbant, éventuellement sur un support distinct de l'absorbant.

7. Processus selon la revendication 5 ou 6, dans lequel le catalyseur pour la réaction du $NO_x$ avec le réactif spécifique du $NO_x$ est un catalyseur de réduction catalytique sélectif (SCR), tel que le fer/zéolite, $V_2O_5/TiO_2$ et/ou des métaux précieux.

8. Processus selon l'une quelconque des revendications précédentes, comprenant une étape antérieure d'oxydation catalytique de NO en $NO_2$.

9. Processus selon l'une quelconque des revendications précédentes, dans lequel le réactif spécifique du $NO_x$ est produit in situ à partir d'un précurseur de celui-ci, éventuellement en faisant réagir le précurseur de manière catalytique.

10. Processus selon l'une quelconque des revendications précédentes, dans lequel le gaz initial est le gaz d'échappement d'un moteur à combustion interne à mélange pauvre, à injection directe, particulièrement diesel ou essence.

11. Processus selon l'une quelconque des revendications précédentes, dans lequel le réactif spécifique du $NO_x$ est l'ammoniac et le précurseur du réactif spécifique du $NO_x$ est l'urée.

12. Processus selon l'une quelconque des revendications précédentes, dans lequel l'absorption et la régénération sont mis en oeuvre dans des conditions de mélange pauvre.

13. Système d'échappement pour un moteur à combustion interne, ledit système comprenant un absorbant de $NO_x$ solide disposé sur au moins deux substrats en série, un moyen d'injection d'un réactif spécifique du $NO_x$ ou d'un précurseur d'un réactif spécifique du $NO_x$ en amont de l'absorbant de $NO_x$ solide, un moyen de détection du réactif spécifique du $NO_x$ au moins situé entre les deux substrats et un moyen de stopper l'injection de réactif spécifique du $NO_x$ lorsque le réactif spécifique du $NO_x$ est détecté à un point au moins situé entre les deux substrats, moyennant quoi le $NO_x$ stocké sur l'absorbant de $NO_x$ solide est réduit par le réactif spécifique du $NO_x$ et l'absorbant de $NO_x$ solide est partiellement régénéré, évitant ainsi substantiellement le rejet du réactif spécifique du $NO_x$.

FIG. 1

FIG. 2